# EUROPÄISCHE PATENTANMELDUNG

(11) **EP 4 800 200 A1**
(43) Veröffentlichungstag der Anmeldung: **02.09.2026**
(21) Anmeldenummer: 26161374.9
(22) Anmeldetag: 27.02.2026
(51) Int. Cl.: E04H 17/00, A01K 3/00

(54) **WEIDEZAUNELEMENT UND WEIDEZAUN**

(30) Priorität: 27.02.2025 DE 202025101040 U
(71) Anmelder: horizont group gmbh, 34497 Korbach (DE)
(72) Erfinder: WAGNER, Raimund, 34497 Korbach (DE)
(74) Vertreter: Kuhnen & Wacker Patent- und Rechtsanwaltsbüro PartG mbB

(57) **Zusammenfassung**

Weidezaunelement (10), aufweisend mehrere elektrisch leitende Drähte (1), die mit einem ersten Ende (11) in einem Basisrohr (3) aufgenommen sind und deren zweite Enden (12) frei geformt werden können. Die ersten Enden (11) sind im Basisrohr (3) mit einer Stromquelle verbindbar, wobei das Basisrohr (3) vorgesehen ist, elektrisch isoliert ortsfest verankert zu werden. Das Basisrohr (3) ist mittels einer mechanisch lösbaren Verbindung an einen Fuß (2) befestigbar und vom Fuß (2) wieder trennbar, wobei der Fuß (2) zur elektrisch isolierenden Verankerung in einem Erdreich (4) vorgesehen ist.

## Beschreibung

Die vorliegende Erfindung betrifft ein Weidezaunelement und einen aus mehreren solchen Weidezaunelementen aufgebauten Weidezaun in Form eines Elektrozauns.

Herkömmlich bekannte Elektrozäune sind beispielsweise aus einem elektrisch leitenden Netz oder einem oder mehreren horizontal gespannten elektrisch leitenden Bändern aufgebaut. Diese bekannten Elektrozäune fügen sich daher nur bedingt in die Umgebung ein und können daher beispielsweise in öffentlichen Anlagen, Zoos, Tiergärten, Tierparks usw. als störend empfunden werden.

DE 20 2007 013 229 U1 zeigt ein Weidezaunelement für den Betrieb als elektrischer Weidezaun, bestehend aus elektrisch leitenden Drähten und einem elektrisch isolierendem Fuß, wobei die elektrisch leitenden Drähte einzeln oder in Bündeln einseitig in einem elektrisch isolierenden Fuß befestigt sind und frei geformt werden können.

Der vorliegenden Erfindung liegt daher die Aufgabe zugrunde, ein Weidezaunelement und einen daraus aufgebauten Weidezaun in Form eines Elektrozauns bereitzustellen, welche im aufgebauten Zustand möglichst nicht sichtbar sind oder sich zumindest besser in die Umgebung integrieren lassen. Dabei soll der Weidezaun nicht nur in einfacher Weise auf- und abgebaut werden können, sondern in einfacher Weise auch temporär geöffnet und wieder geschlossen werden können.

Die vorstehende Aufgabe wird durch ein Weidezaunelement gemäß Anspruch 1 und einen Weidezaun gemäß Anspruch 11 gelöst. Bevorzugte Ausführungsformen der Erfindung sind Gegenstand der sich daran anschließenden Unteransprüche.

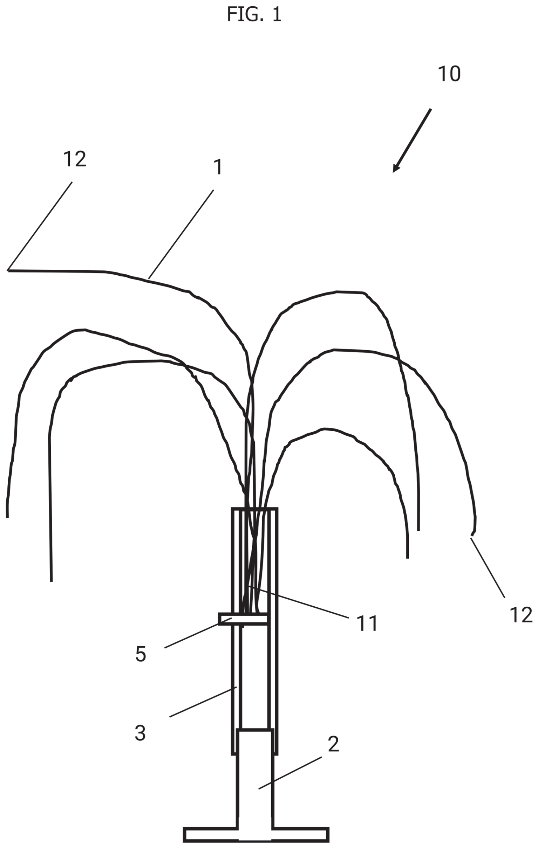

Ein in Fig. 1 gezeigtes Weidezaunelement 10 gemäß einer beispielhaften Ausführungsform der vorliegenden Erfindung weist mehrere elektrisch leitende Drähte 1 auf, die mit einem ersten Ende 11 in einem Basisrohr 3 aufgenommen sind und deren zweite Enden 12 frei geformt werden können. Die ersten Enden 11 im Basisrohr 3 sind dabei mit einer Stromquelle verbindbar und das Basisrohr 3 ist vorgesehen, um elektrisch isoliert ortsfest verankert zu werden.

Das erfindungsgemäße Weidezaunelement mit der vorstehenden Konfiguration kann daher in Form eines Grasbüschels, Strauchs oder Baums bereitgestellt sein und sich somit ideal in eine Verwendungsumgebung beispielsweise im Freien einfügen. Dies gilt umso mehr, wenn die wesentlichen Komponenten des Weidezaunelements zusätzlich in einer zur Verwendungsumgebung passenden, unauffälligen Farbe gestaltet sind.

Die elektrisch leitenden Drähte 1 können dabei aus einem geeigneten Material ausgebildet sein, welches elektrisch leitend ist und eine plastische Verformung zulässt. Neben Metallmaterialien sind somit auch Kompositwerkstoffe denkbar. Ferner können die elektrisch leitenden Drähte 1 auch mehrteilig ausgebildet sein, sofern diese Mehrteiligkeit das freie Formen der zweiten Enden 12 der Drähte 1 nicht beeinträchtigt.

Bei dem in Fig. 1 gezeigten Weidezaunelement 10 kann ein oberes Ende des Basisrohrs 3, aus dem die elektrisch leitenden Drähte 1 herausragen, mit einem geeigneten Dichtstoff oder Dichtelement flüssigkeitsdicht abgedichtet sein, so dass von oben keine Flüssigkeit in das Basisrohr 3 eindringen kann. Alternativ dazu kann das obere Ende des Basisrohrs 3 offen sein und das Basisrohr an einer geeigneten Stelle oberhalb einer Verbindungsposition der elektrisch leitenden Drähte 1 mit der Stromquelle flüssigkeitsdicht abgedichtet sein. In diesem Fall ist unmittelbar oberhalb der Abdichtungsstelle eine Ablauföffnung im Basisrohr 3 bereitgestellt, so dass von oben in das Basisrohrs 3 eindringendes Wasser nach außen ablaufen kann und nicht zu Kurzschlüssen und/oder Korrosion im Basisrohr führt.

Ferner kann im oberen Bereich des Basisrohrs 3 ein Positionierungselement, beispielweise in Form einer Lochplatte oder dergleichen, bereitgestellt sein, welches die elektrisch leitenden Drähte 1 in entsprechenden Öffnungen aufnimmt und somit eine gewisse (Vor-)Positionierung der Drähte 1 ermöglicht.

Gemäß einer weiteren beispielhaften Ausführungsform des erfindungsgemäßen Weidezaunelements kann das Basisrohr 3 mittels einer mechanisch lösbaren Verbindung an einen Fuß 2 befestigbar sein und von dem Fuß 2 wieder trennbar sein, wobei der Fuß 2 zur elektrisch isolierenden Verankerung im Erdreich 4 vorgesehen ist. Durch die Verwendung des Fußes 2 kann das Weidezaunelement mit den im Basisrohr 3 aufgenommenen elektrisch leitenden Drähten 1 auf einfache Art und Weise an dem im Erdreich verankerten Fuß 2 montiert und bei Bedarf zerstörungsfrei wieder demontiert werden, wie z.B. während der Wintermonate, in denen der Weidezaun nicht benötigt wird. Die elektrisch isolierende Verankerung des Fußes 2 im Erdreich 4 dient beispielsweise zur Vermeidung von Kurzschlüssen.

Die mechanisch lösbare Verbindung zwischen dem Basisrohr 3 und dem Fuß 2 kann beispielsweise eine Schraubverbindung, eine Gewindeverbindung, eine Rastverbindung, eine Steckverbindung - mit und ohne Splint - oder eine Bajonette-Verbindung sein, wobei auch andere mechanisch lösbare Verbindungen möglich sind.

Gemäß einer weiteren beispielhaften Ausführungsform des erfindungsgemäßen Weidezaunelements kann das Basisrohr 3 aus einem elektrisch nichtleitenden Material gebildet sein und die elektrisch leitenden Drähte 1 können über ein in Fig. 1 gezeigtes Verbindungsstück 5, das am Basisrohr 3 angeordnet ist, mit einer nicht gezeigten Stromquelle verbindbar sein. Bei dieser Konfiguration können die elektrisch leitenden Drähte 1 über das Verbindungsstück 5 zuverlässig und auf einfache Art und Weise mit der Stromquelle verbunden werden. Zudem können die Herstellungskosten reduziert werden.

Gemäß einer weiteren beispielhaften Ausführungsform des erfindungsgemäßen Weidezaunelements kann das Basisrohr 3 oder der Fuß 2 zur Verankerung eine Stockschraube aufweisen, die im Erdreich 4 verankert werden kann. Durch die Verwendung der Stockschraube kann das Weidezaunelement an einer Verwendungsstelle montiert und zerstörungsfrei wieder demontiert werden.

Gemäß einer weiteren beispielhaften Ausführungsform des erfindungsgemäßen Weidezaunelements können das Basisrohr 3 oder der Fuß 2 aus elektrisch nichtleitendem Kunststoff, insbesondere faserverstärktem Kunststoff, gebildet sein. Hierfür sind verschiedenste Kunststoffe denkbar, mit denen die gewünschten Eigenschaften des Basisrohrs oder des Fußes realisiert werden können. Durch die Verwendung von Kunststoff kann neben der geforderten Festigkeit auch ein geringes Gewicht des Basisrohrs oder des Fußes erreicht werden. Zudem entfällt die Notwendigkeit, das Basisrohr oder den Fuß beispielsweise gegenüber dem Erdreich gesondert zu isolieren, und die Herstellungskosten können reduziert werden.

Gemäß einer weiteren beispielhaften Ausführungsform des erfindungsgemäßen Weidezaunelements können die zweiten Enden 12 so geformt sein, dass das Weidezaunelement 10 eine bündel- bzw. büschelförmige, dreidimensionale Gestalt aufweist. So kann das Weidezaunelement beispielsweise die Form eines Grasbüschels oder Busches annehmen und sich auf verbesserte Art und Weise in die Umgebung an einer Verwendungsstelle einfügen, so dass dieses nicht störend auffällt.

Gemäß einer weiteren beispielhaften Ausführungsform des erfindungsgemäßen Weidezaunelements können die freien Enden 12 der elektrisch leitenden Drähte 1 abgerundet sein, und/oder diese können mit einer Schlaufe oder mit einer Kugel - oder knopfartigen Schutzkappen versehen sein. Durch eine solche Konfiguration kann die von den freien Enden 12 der elektrisch leitende Drähte 1 ausgehende Verletzungsgefahr minimiert werden.

Die vorstehend erwähnte Schlaufe, die Kugel oder die knopfartigen Schutzkappen an den freien Enden 12 der elektrisch leitenden Drähte 1 können gemäß einer weiteren beispielhaften Ausführungsform des erfindungsgemäßen Weidezaunelements elektrisch leitend sein, wodurch die Abwehrfunktion des Weidezaunelements auch an solchen geschützten Enden der Drähte 1 bereitgestellt werden kann.

Gemäß einer weiteren beispielhaften Ausführungsform des erfindungsgemäßen Weidezaunelements kann das Basisrohr 3 ein Metallrohr sein, das zumindest in den Bereichen, in denen es mit dem Material, in oder an dem es verankert wird, mit nichtleitendem Kunststoff ummantelt ist. Das Metallmaterial für das Basisrohr 3 kann dabei unter Berücksichtigung der geforderten Festigkeit sowie weiterer gewünschter Eigenschaften des Basisrohrs 3, wie z.B. der Korrosionsbeständigkeit, ausgewählt werden. Der zur Ummantelung des Basisrohrs 3 verwendete Kunststoff kann ein beliebiger Kunststoff sein, welcher gegenüber den auftretenden mechanischen und sonstigen Belastungen ausreichend beständig ist.

Gemäß einer weiteren beispielhaften Ausführungsform kann das erfindungsgemäße Weidezaunelement mehrere Basisrohre 3 aufweisen, die modular miteinander verbunden werden können und in denen erste Enden 11 elektrisch leitender Drähte 1 aufgenommen sind, wobei das Weidezaunelement 10 eine busch- oder baumartige Struktur zeigt. Durch ein solches Weidezaunelement mit mehreren miteinander verbundenen Basisrohren, in denen erste Enden elektrisch leitender Drähte aufgenommen sind, können größere busch- oder baumartige Strukturen (Äste) nachgebildet werden, wodurch der Schutz- bzw. Abwehrbereich eines solchen modular aufgebauten Weidezaunelements entsprechend vergrößert werden kann, ohne die natürlich wirkende pflanzenartige Erscheinungsform des Weidezaunelements zu beeinträchtigen.

Gemäß einer weiteren beispielhaften Ausführungsform der vorliegenden Erfindung ist ein Weidezaun bereitgestellt, welcher mit/aus mehreren der vorstehend genannten Weidezaunelemente 10 aufgebaut ist. Dadurch kann ein Weidezaun mit einer beliebigen Größe gebildet werden.

Gemäß einer weiteren beispielhaften Ausführungsform des erfindungsgemäßen Weidezauns können die einzelnen Weidezaunelemente 10 elektrisch parallel und/oder seriell miteinander verbunden sein.

Dabei können beispielsweise ein oder mehrere zweite Enden 12 der Drähte 1 zweier Weidezaunelemente 10 elektrisch leitend miteinander verbunden sein, wodurch die Weidezaunelemente 10 auf einfache Art und Weise seriell miteinander verbunden sein können. Die serielle Verbindung bzw. Schaltung der einzelnen Weidezaunelemente kann jedoch auch auf andere Art und Weise erfolgen.

Gemäß einer weiteren beispielhaften Ausführungsform des erfindungsgemäßen Weidezauns kann die Verbindung der zweiten Enden 12 dabei mechanisch lösbar sein oder eine stoffschlüssige Verbindung sein. Eine solche mechanisch lösbare Verbindung kann beispielsweise durch einen Gewindeeingriff oder eine Rast- oder Steckverbindung erreicht werden und ermöglicht eine zerstörungsfreie Demontage des Weidezauns. Geeignete stoffschlüssige Verbindungen umfassen ferner beispielswiese Löt- und Schweißverbindungen sowie Verbindungen unter Verwendung eines elektrisch leitenden Klebers oder eines anderen elektrisch leitenden Bindemittels.

### Bezugszeichenliste

- 1:: Elektrisch leitender Draht
- 2:: Fuß
- 3:: Basisrohr
- 5:: Verbindungsstück
- 10:: Weidezaunelement
- 11:: Erstes Ende
- 12:: Zweites Ende

## Patentansprüche

1. Weidezaunelement (10), aufweisend mehrere elektrisch leitende Drähte (1), die mit einem ersten Ende (11) in einem Basisrohr (3) aufgenommen sind und deren zweite Enden (12) frei geformt werden können, wobei die ersten Enden (11) im Basisrohr (3) mit einer Stromquelle verbindbar sind und das Basisrohr (3) vorgesehen ist, elektrisch isoliert ortsfest verankert zu werden, wobei das Basisrohr (3) mittels einer mechanisch lösbaren Verbindung an einen Fuß (2) befestigbar und vom Fuß (2) wieder trennbar ist, und wobei der Fuß (2) zur elektrisch isolierenden Verankerung in einem Erdreich (4) vorgesehen ist.

2. Weidezaunelement (10) nach Anspruch 1, wobei die mechanisch lösbare Verbindung zwischen Basisrohr (3) und Fuß (2) eine Schraubverbindung, eine Gewindeverbindung, eine Rastverbindung, eine Steckverbindung - mit und ohne Splint - oder eine Bajonette-Verbindung ist.

3. Weidezaunelement (10) nach einem der vorherigen Ansprüche, wobei das Basisrohr (3) aus einem elektrisch nichtleitenden Material gebildet ist und die elektrisch leitenden Drähte über ein Verbindungsstück (5), das am Basisrohr (3) angeordnet ist, mit einer Stromquelle verbindbar sind.

4. Weidezaunelement (10) nach einem der vorherigen Ansprüche, wobei zur Verankerung das Basisrohr (3) oder der Fuß (2) eine Stockschraube aufweist, die im Erdreich (4) verankert werden kann.

5. Weidezaunelement (10) nach einem der vorherigen Ansprüche, wobei das Basisrohr (3) oder der Fuß (2) aus elektrisch nichtleitendem Kunststoff, insbesondere faserverstärktem Kunststoff gebildet ist.

6. Weidezaunelement (10) nach einem der vorherigen Ansprüche, wobei die zweiten Enden (12) so geformt sind, dass das Weidezaunelement (10) eine bündel- bzw. büschelförmige, dreidimensionale Gestalt aufweist.

7. Weidezaunelement (10) nach einem der vorherigen Ansprüche, wobei die freien Enden der elektrisch leitenden Drähte (1) abgerundet, mit einer Schlaufe oder mit einer Kugel - oder knopfartigen Schutzkappen versehen sind.

8. Weidezaunelement (10) nach Anspruch 7, wobei die Schlaufe, die Kugel - oder die knopfartigen Schutzkappen elektrisch leitend sind.

9. Weidezaunelement (10) nach einem der vorherigen Ansprüche, bei dem das Basisrohr (3) ein Metallrohr ist, das zumindest in den Bereichen, in denen es mit dem Material, in oder an dem es verankert wird, mit nichtleitendem Kunststoff ummantelt ist.

10. Weidezaunelement (10) nach einem der vorherigen Ansprüche, das mehrere Basisrohre (3) aufweist, die modular miteinander verbunden werden können und in denen erste Enden (11) elektrisch leitender Drähte (1) aufgenommen sind, wobei das Weidezaunelement (10) eine busch- oder baum-artige Struktur zeigt.

11. Weidezaun (100) aufgebaut mit mehreren Weidezaunelementen (10) nach einem der Ansprüche 1 bis 11.

12. Weidezaun (100) nach Anspruch 11, wobei die einzelnen Weidezaunelemente (10) elektrisch parallel und/oder seriell miteinander verbunden sind.

13. Weidezaun (100) nach Anspruch 10 oder 11, wobei ein oder mehrere zweite Enden (12) der Drähte (1) zweier Weidezaunelemente (10) elektrisch leitend miteinander verbunden sind.

14. Weidezaun (100) nach Anspruch 13, wobei die Verbindung der zweiten Enden (12) mechanisch lösbar ist oder eine stoffschlüssige Verbindung ist.
